# EUROPÄISCHE PATENTSCHRIFT

(11) **EP 3 649 631 B1**
(45) Veröffentlichungstag und Bekanntmachung des Hinweises auf die Patenterteilung: **28.07.2021**
(21) Anmeldenummer: 18732340.7
(22) Anmeldetag: 19.06.2018
(51) Int. Cl.: G08C 17/00

(54) **FELDGERÄTEADAPTER ZUR DRAHTLOSEN DATENÜBERTRAGUNG**
FIELD DEVICE ADAPTER FOR WIRELESS DATA TRANSMISSION
ADAPTATEUR DE DISPOSITIF DE TERRAIN POUR UNE TRANSMISSION DE DONNÉES SANS FIL

(30) Priorität: 04.07.2017 DE 102017114851
(43) Veröffentlichungstag der Anmeldung: 13.05.2020
(73) Patentinhaber: Endress+Hauser SE+Co. KG, 79689 Maulburg (DE)
(72) Erfinder: SCHÄUBLE, Harald, 79541 Lörrach (DE); BAUER, Max, 79618 Rheinfelden (DE); STIB, Ralph, 79677 Schönau (DE); BUSCEMI, Marco, 79664 Wehr (DE)
(74) Vertreter: Andres, Angelika Maria
(86) Internationale Anmeldenummer: PCT/EP2018/066250
(87) Internationale Veröffentlichungsnummer: WO 2019/007668

(56) Entgegenhaltungen:
- WO-A1-2009/040191
- US-A1- 2005 245 291
- US-A1- 2008 268 784
- US-A1- 2012 235 479

## Beschreibung

Die Erfindung bezieht sich auf einen Feldgeräteadapter zur drahtlosen Datenübertragung sowie ein Feldgerät der Automatisierungstechnik zum Erfassen und/oder Stellen einer Prozessgröße.

In der Automatisierungstechnik, insbesondere in der Prozessautomatisierungstechnik, werden vielfach Feldgeräte eingesetzt, die zur Bestimmung, Optimierung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, Leitfähigkeitsmessgeräte, usw., welche die entsprechenden Prozessvariablen Füllstand, Durchfluss, Druck, Temperatur bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os (elektrische Schnittstellen), Funkadapter bzw. allgemein Geräte verstanden, die auf der Feldebene angeordnet sind.

Eine Vielzahl solcher Feldgeräte wird von der Firma Endress + Hauser hergestellt und vertrieben.

Ein ähnliches Feldgerät ist zum Beispiel offenbart im Dokument US 2008/268784 A1.

Gegenwärtig sind in einer Vielzahl der bestehenden Automatisierungsanlagen noch Zweileiterfeldgeräte, die über eine Zweidrahtleitung zu einer übergeordneten Einheit, bspw. eine Steuereinheit SPS, verbunden sind, gängig. Die Zweileiterfeldgeräte sind derartig ausgebildet, dass die Mess- bzw. Stellwerte als Haupt-Prozessvariable über die Zweidrahtleitung bzw. das Zweileiterkabel analog in Form eines 4-20 mA Signals kommuniziert, d.h. übertragen, werden. Zur Übertragung aller anderen Daten hat sich insbesondere das HART Protokoll bewährt, bei dem dem analogen Stromsignal von 4-20 mA ein Frequenzsignal als digitales Zweileitersignal zur Datenübertragung überlagert wird. Gemäß des HART Protokolls wird zwischen 1200 Hz und 2400 Hz zur Datenübertragung umgeschaltet, wobei die niedriger Frequenz für eine logische "0" und die höhere Frequenz für eine logische "1" steht. Auf diese Weise bleibt das sich nur langsam veränderliche analoge Stromsignal von der Frequenzüberlagerung unberührt, so dass mittels HART analoge und digitale Kommunikation vereint wird.

Im Zuge der zunehmenden Digitalisierung ist es jedoch wünschenswert, dass die Daten mit dem Feldgerät nicht nur über die Zweidrahtleitung, also rein drahtgebunden, übertragen werden können, sondern dass die Daten auch drahtlos kommuniziert werden.

Sei es um die Daten drahtlos zu einer Datenbank, bspw. einer Cloud-Datenbank, zu übertragen und dort verfügbar zu machen oder um Daten zwischen dem Feldgerät und einer mobilen Bedieneinheit drahtlos zu übertragen, um bspw. das Feldgerät über das mobile Bediengerät drahtlos zu parametrieren.

Es ist somit eine Aufgabe der Erfindung, eine Möglichkeit vorzuschlagen, mittels derer bestehende Feldgeräte, die zur reinen drahtgebundenen Datenübertragung ausgebildet sind, für eine drahtlose Datenkommunikation nachgerüstet werden können.

Die Aufgabe wird durch einen Feldgeräteadapter zur drahtlosen Datenübertragung und ein Feldgerät der Automatisierungstechnik gelöst.

Hinsichtlich des Feldgeräteadapters wird die Aufgabe durch einen Feldgeräteadapter zur drahtlosen Datenübertragung gelöst, welcher zumindest folgendes aufweist:
- ein Adaptergehäuse mit einem ersten und einem zweiten Ende, wobei das erste Ende derartig ausgebildet ist, dass der Feldgeräteadapter an ein Feldgerät, bevorzugt einen Kabelverschraubungsanschluss eines Feldgeräts, mechanisch anschließbar ist und das zweite Ende derartig ausgebildet ist, dass eine Zweidrahtleitung zur Datenübertragung an den Feldgeräteadapter elektrisch anschließbar ist, wobei das Adaptergehäuse ferner eine Adapterkammer zwischen dem ersten und dem zweiten Ende aufweist;
- eine in der Adapterkammer angeordnete Versorgungselektronik, die dazu eingerichtet ist, über einen Spannungsabgriff an der an dem zweiten Ende anschließbaren Zweidrahtleitung eine Versorgungsspannung bereitzustellen;
- zumindest eine in der Adapterkammer angeordnete und durch die bereitgestellte Versorgungspannung gespeiste Adapterelektronik;
- ein an dem ersten Ende befindliches Adapteranschlusskabel zum elektrischen Anschließen der Adapterelektronik an eine Feldgeräteelektronik des am ersten Ende anschließbaren Feldgerätes;
wobei die Adapterelektronik dazu eingerichtet ist, die Zweileitersignale zwischen der an dem erste Ende durch die Adapteranschlusskabel elektrisch anschließbaren Feldgerätelektronik und der an dem zweiten Ende anschließbaren Zweileitdrahtleitung zu kommunizieren und wobei die Adapterelektronik ferner dazu eingerichtet ist, die Zweileitersignale in Funksignale oder umgekehrt zu übersetzen und per Funk zu senden bzw. zu empfangen.

Beispielsweise können über den erfindungsgemäßen Feldgeräteadapter Daten zu einer Cloud-Datenbank übertragen werden. Als Cloud-Datenbank soll im Sinne der vorliegenden Erfindung eine Datenbank verstanden werden, die von einem Benutzer über das Internet kontaktiert werden kann. Es kann hierbei vorgesehen sein, dass die Datenbank eine Applikation aufweist, beispielsweise zum Visualisieren der Daten, welche auf der Datenbank abgelegt sind. Ein Benutzer kann per Internet von seinem Gerät, beispielsweise einem PC oder einem mobilen Endgerät, auf die Applikation der Datenbank und somit die Daten zugreifen.

Im Sinne der vorliegenden Erfindung sollen unter den Begriffen Zweileiterfeldgeräte und Zweidrahtleitung gleichbedeutend auch Vierleiterfeldgeräte und Vierdrahtleitungen verstanden werden.

Eine vorteilhafte Ausgestaltung des Feldgeräteadapters sieht vor, dass die Adapterelektronik dazu eingerichtet ist, digitale Zweileitersignale, die auf einem HART Protokoll basieren, in Funksignale oder umgekehrt zu übersetzen.

Eine weitere vorteilhafte Ausgestaltung des Feldgeräteadapters sieht vor, dass die Adapterelektronik zumindest ein HART-Modem aufweist, das die Umsetzung der digitalen Zweileitersignal, die auf einem bzw. dem HART Protokoll basieren, in Funksignale oder umgekehrt durchführt. Insbesondere kann die Ausgestaltung vorsehen, dass das HART-Modem als ein sekundärer Master gemäß einem bzw. dem HART Protokoll eingerichtet ist.

Wiederum eine weitere vorteilhafte Ausgestaltung des Feldgeräteadapters sieht vor, dass die Adapterelektronik ferner zumindest einen Kommunikationswiderstand aufweist, der zwischen der an dem zweiten Ende anschließbaren Zweidrahtleitung und dem an dem ersten Ende befindlichen Adapteranschlusskabel angeordnet ist, wobei die Adapterelektronik dazu eingerichtet ist, die Funksignale zu empfangen und die empfangenen Funksignale mit Hilfe des Kommunikationswiderstandes in Zweileitersignale umzusetzen und die umgesetzten Zweileitersignale der durch die Adapteranschlusskabel elektrisch anschließbaren Feldgerätelektronik zuzuführen. Insbesondere kann die Ausgestaltung vorsehen, dass die Adapterelektronik ferner dazu eingerichtet ist, mit Hilfe des Kommunikationswiderstandes analoge Zweileitersignale, die auf einem 4-20 mA Standard basieren, in Funksignale oder umgekehrt zu übersetzen.

Eine weitere vorteilhafte Ausgestaltung des Feldgeräteadapters sieht vor, dass die Adapterelektronik ferner dazu eingerichtet ist, die auf einem HART Protokoll basierenden digitalen Zweileitersignale, in Funksignal gemäß eines der folgenden Funkprotokolle:
- ein Bluetooth-Protokoll,
- ein 6LoWPAN-Protokoll,
- ein WirelessHART-Protokoll, und/oder
- ein 6TiSCH-Protokoll
zu übersetzen.

Eine weitere vorteilhafte Ausgestaltung des Feldgeräteadapters sieht vor, dass die Versorgungselektronik eine Spannungsreferenz, zumindest eine Diode, vorzugsweise eine z-Diode, oder einen Widerstand umfasst und der Spannungsabgriff über die Spannungsreferenz, die zumindest eine Diode, vorzugsweise die z-Diode, oder den Widerstand erfolgt. Insbesondere kann die Ausgestaltung vorsehen, dass die Spannungsreferenz dazu ausgebildet ist, die Versorgungsspannung unabhängig von einem Zweileiterstrom der Zweidrahtleitung bereitzustellen.

Ferner kann die Ausgestaltung vorsehen, dass die zumindest eine Diode, vorzugsweise die z-Diode, derartig angeordnet ist, dass eine Kathode der zumindest einen Diode, vorzugsweise der z-Diode, mit der an dem zweiten Ende anschließbaren Zweidrahtleitung und eine Anode mit dem an dem ersten Ende befindlichen Adapteranschlusskabel verbunden ist oder dass dem Widerstand ein Überspanungsschutzwiderstand zum Überspannungsschutz parallel geschaltet ist.

Wiederum eine weitere Ausgestaltung des Feldgeräteadapters sieht vor, dass der Kommunikationswiderstand ein Teil der Versorgungselektronik ist und der Spannungsabgriff über den Kommunikationswiderstand erfolgt.

Eine weitere vorteilhafte Ausgestaltung des Feldgeräteadapters sieht ferner eine Anschlussklemme zum elektrischen Anschließen und/oder Kontaktieren der Zweidrahtleitung mit der Adapterelektronik vor, wobei die Anschlussklemme vorzugsweise im Bereich des zweiten Endes in der Adapterkammer angeordnet ist.

Eine weitere vorteilhafte Ausgestaltung des Feldgeräteadapters sieht vor, dass der Feldgeräteadapter, insbesondere das Adaptergehäuse, in Form einer PG-Kabelverschraubung ausgebildet ist.

Eine weitere vorteilhafte Ausgestaltung des Feldgeräteadapters sieht vor, dass das zweite Ende des Adaptergehäuses derartig ausgebildet ist, dass der Feldgeräteadapter über ein M20-Gewinde an einen Kabelverschraubungsanschluss eines Feldgerätes mechanisch anschließbar ist.

Eine weitere vorteilhafte Ausgestaltung des Feldgeräteadapters sieht vor, dass die Adapterelektronik zumindest eine Funkeinheit umfasst, welche vorzugsweise eine Antenne zum Senden der Funksignale und/oder zum Empfangen der Funksignale und ein Funkmodul zum Umsetzen der Funksignale aufweist.

Hinsichtlich des Feldgerätes der Automatisierungstechnik wird die Aufgabe durch ein Feldgerät der Automatisierungstechnik zum Erfassen und/oder Stellen einer Prozessgröße gelöst, welches folgendes aufweist:
- ein Feldgerätegehäuse mit zumindest einer Gehäuseöffnung;
- eine innerhalb des Feldgerätegehäuses angeordnete Feldgerätelektronik, die dazu eingerichtet ist, Daten in Form von Zweileitersignalen, insbesondere Zweileitersignalen die auf einem HART Protokoll basieren, zu kommunizieren;
- einen Feldgeräteadapter nach einem oder mehreren der vorhergehenden Ansprüche, wobei der Feldgeräteadapter mit dem ersten Ende an der zumindest einen Gehäuseöffnung mechanisch angebracht und die Adapterelektronik über das Adapteranschlusskabel elektrisch mit der Feldgeräteelektronik verbunden ist, so dass die Zweileitersignale zwischen der Feldgeräteelektronik und einer an dem zweiten Ende anschließbaren Zweidrahtleitung durch die Adapterelektronik übertragen werden und die Adapterelektronik ferner dazu eingerichtet ist, die Zweileitersignal in Funksignal oder umgekehrt umzusetzen und per Funk zu übertragen bzw. zu empfangen.

Die Erfindung wird anhand der nachfolgenden Zeichnungen näher erläutert. Es zeigt:
Fig. 1: eine schematische Darstellung eines Zweileiterfeldgerätes, wie es gegenwärtig in einer Vielzahl der bestehenden Automatisierungsanlagen vorzufinden ist und mit welchem rein drahtgebunden über eine Zweidrahtleitung Daten kommuniziert werden kann,
Fig. 2: eine schematische Darstellung eines erfindungsgemäßen Feldgeräteadapters, und
Fig. 3: eine schematische Darstellung eines Feldgerätes, an dem ein Feldgeräteadapter angebracht ist.

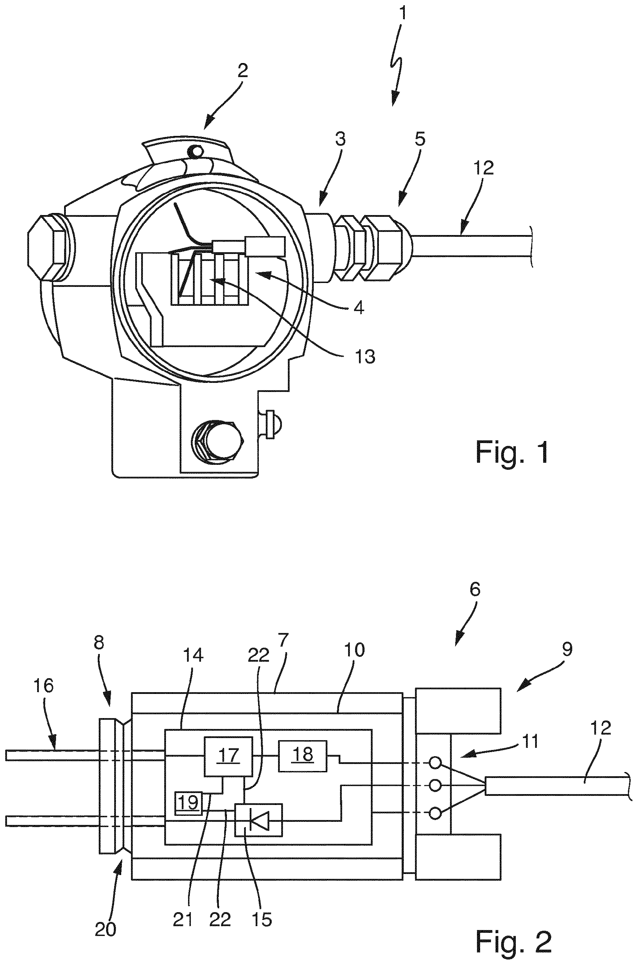

Figur 1 zeigt schematisch ein Zweileiterfeldgerät, welches ein metallisches Gehäuse 2 umfasst, indem eine Feldgeräteelektronik 4 angeordnet ist. Die Feldgeräteelektronik 4 ist derartig ausgebildet, dass diese Anschlussklemmen 13 aufweist, über die eine Zweidrahtleitung 12 elektrisch angeschlossen ist. Über die Zweidrahtleitung wird die Feldgeräteelektronik 4 und somit das Feldgerät 1 an eine, in Fig. 1 nicht gesondert dargestellte, übergeordnete Einheit angeschlossen, um mit der übergeordneten Einheit Daten drahtgebunden zu kommunizieren. Hierbei werden die Mess- bzw. Stellwerte als Haupt-Prozessvariable über die Zweidrahtleitung 12 analog in Form eines 4-20 mA Stromsignals kommuniziert und alle anderen Daten werden in Form eines digitalen Zweileitersignals gemäß dem HART Standard übertragen.

Um die von außerhalb des Gehäuses 2 kommende Zweidrahtleitung mit der im Gehäuse 2 angeordneten Feldgeräteelektronik elektrisch kontaktieren zu können, weist das metallische Gehäuse 2 eine Gehäuseöffnung 3 auf. In die Gehäuseöffnung 3 ist eine Kabelverschraubung 5 eingebracht, so dass die Zweidrahtleitung 12 durch die Kabelverschraubung 5 in das Gehäuse 2 einbringbar ist. Die Kabelverschraubung 5 ist vorzugsweise in Form einer PG-Kabelverschraubung, d.h. eine Kabelverschraubung mit Stahlpanzerrohrgewinde, gemäß der im Mai 2014 veröffentlichten Norm DIN EN 62444 ausgebildet. Die Kabelverschraubung 5 kann bspw. als M20, d.h. einen Außendurchmesser von 20 mm aufweisende, PG-Kabelverschraubung ausgebildet sein.

Fig. 2 zeigt eine schematische Darstellung eines erfindungsgemäßen Feldgeräteadapters 6. Der Feldgeräteadapter 6 weist ein Adaptergehäuse 7 mit einer Adapterkammer 10 auf. Das Adaptergehäuse 7 ist derartig ausgebildet, dass der Feldgeräteadapter 6 an einem ersten Ende mechanisch an eine Kabelverschraubung 5, insb. eine PG-Kabelverschraubung, eines Feldgerätes 1 befestigbar ist. Vorzugsweise weist das erste Ende des Adaptergehäuses hierfür ein M20 Gewinde auf. An einem dem ersten Ende 8 gegenüberliegenden zweiten Ende 9, ist das Adaptergehäuse 7 derartig ausgebildet, dass eine Zweidrahtleitung 12 zur Datenübertragung an den Feldgeräteadapter 6 elektrisch anschließbar ist. Hierfür kann bspw. eine sich an dem zweiten Ende befindliche Anschlussklemme 11 dienen. Ferner weist der Feldgeräteadapter 6 eine Adapterelektronik 14 und eine Versorgungselektronik 15 auf, die ebenfalls innerhalb der Adapterkammer 10 angeordnet sind. Die Versorgungselektronik 15 kann, wie in Fig. 2 dargestellt, als ein Teil der Adapterelektronik 14 oder separat von der Adapterelektronik 14 ausgebildet sein.

Die Versorgungselektronik 15 kann eine Spannungsreferenz, zumindest eine Diode, vorzugsweise eine z-Diode, oder einen Widerstand umfassen und dazu eingerichtet sein, über einen Spannungsabgriff eine Versorgungsspannung zur Spannungsversorgung der Adapterelektronik 14 bereitzustellen.

Im einfachsten Fall ist die Bereitstellung der Versorgungsspannung über einen Spannungsabgriff über die Spannungsreferenz, die zumindest eine Diode, vorzugsweise z-Diode, oder den Widerstand realisiert. Die Diode ist derartig angeordnet, dass eine Kathode mit der an dem zweiten Ende 9 anschließbaren Zweidrahtleitung 12 und eine Anode mit dem an dem ersten Ende 8 befindlichen Adapteranschlusskabel 16 verbunden sind. Denkbar sind auch mehrere entsprechende in Reihe geschaltete Dioden. In dem Fall, dass die Versorgungselektronik 15 einen Widerstand, über den der Spannungsabgriff erfolgt, aufweist, kann ein zu dem Widerstand paralleler weiterer Widerstand zum Überspannungsschutz vorgesehen sein.

Die Adapterelektronik 14 , die durch die von der Versorgungselektronik 15 bereitgestellten Versorgungspannung gespeist wird, ist an dem ersten Ende 8 mit dem Adapteranschlusskabel 16 und an dem zweiten Ende 9 mit der Zweidrahtleitung 12 durch die Anschlussklemmen 11 verbunden. Die Adapterelektronik 14 ist dazu eingerichtet, dass Zweileitersignale, also das 4-20 mA basierte analoge Zweileiter-Stromsignal als auch das gemäß dem HART Standard ausgebildeten digitale Zweilitersignal, zwischen der Zweidrahtleitung 12 und den Adapteranschlusskabeln 16 in beide Richtungen zu kommunizieren. In anderen Worten leitet die Adapterelektronik die Zweileitersignale in beide Richtungen weiter. Ferner ist die Adapterelektronik 14 dazu eingerichtet, die Zweileitersignale, insbesondere die digitalen Zweileitersignale, welche gemäß dem HART Standard übertragen werden, abzugreifen und in Funksignal zu übersetzen und per Funk auszusenden. Die Adapterelektronik 14 kann aber nicht nur zum Aussenden der Funksignale eingerichtet sein, sondern auch zum Empfangen von Funksignalen und Umsetzen der Funksignale in digitale Zweileitersignal, die anschließend über das Anschlusskabel 16 einer Feldgeräteelektronik 4 zugeführt werden. Die Umsetzung und das Sende bzw. Empfangen erfolgt über eine Funkeinheit 19, die hierzu ein Funkmodul zur Umsetzung und eine Antenne zum Aussenden bzw. Empfangen aufweist. Auf diese Weise lässt sich bspw. ein Feldgerät drahtlos über Funksignale parametrieren.

Die Adapterelektronik 14 umfasst zum Umsetzen der digitalen Zweileitersignale in zur Übertragung mittels der Funkeinheit geeignete Signale und umgekehrt ein HART-Modem, welches zur Kommunikation mit der Funkeinheit 19 bspw. mittels einer seriellen Schnittstelle 21, bspw. UART, verbunden ist. Damit die Adapterelektronik 14 digitale Zweileitersignale zu dem Feldgerät 1 kommunizieren kann, ist das HART Modem als ein sekundärer Master eingerichtet und die Adapterelektronik 14 weist ferner einen Kommunikationswiderstand 18 auf. Über den Kommunikationswiderstand 18 wird eine dem zu übertragenden digitalen Zweileitersignal entsprechende Spannungsmodulation realisiert.

Die Adapterelektronik 14 und die Funkeinheit 19 können darüber hinaus derartig ausgebildet sein, dass über den Kommunikationswiderstand 18 auch das analoge Stromsignal bzw. Zweileitersignal von der Adapterelektronik 14 erfasst bzw. abgegriffen wird und durch die Funkeinheit 19 in Funksignale umgesetzt wird, so dass auch die analogen Zweileitersignale per Funk übertragbar sind.

Die Funkeinheit 19 ist derartig ausgebildet, dass insbesondere Funksignale gemäß einem Bluetooth-Protokoll oder davon abgewandelten Variante, ein 6LoWPAN-Protokoll, ein WirelessHART-Protokoll, und/oder ein 6TiSCH-Protokoll.

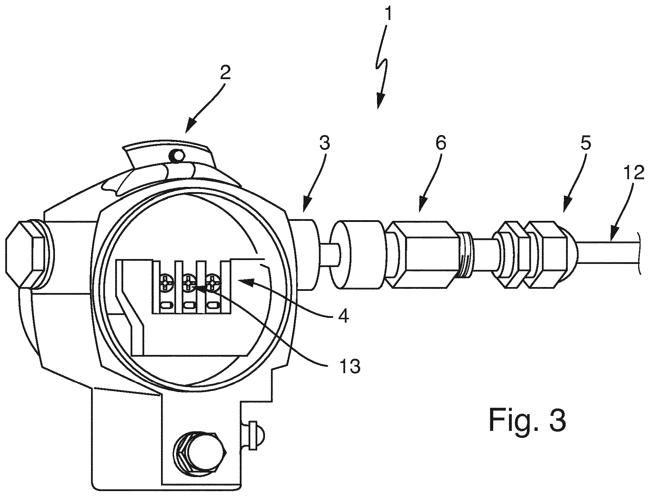

Fig. 3 zeigt eine schematische Darstellung eines Feldgerätes 1, an dem ein Feldgeräteadapter 6, wie er zuvor beschrieben ist, angebracht ist. Der Feldgeräteadapter 6 kann dabei, wie in Fig. 3 dargestellt, derartig angeordnet sein, dass er sich zwischen der Gehäuseöffnung 3 des Feldgerätes 1 und der Kabelverschraubung 5 befindet. In diesem Fall, ist das zweite Ende 9 des Adaptergehäuses 7 derartig ausgebildet, dass die Kabelverschraubung 5 befestigbar ist. Beispielsweise kann das zweite Ende 9 auch in Form einer PG-Kabelverschraubung mit einem M20 Gewinde gemäß der im Mai 2014 veröffentlichten Norm DIN EN 62444 ausgebildet sein.

Alternativ kann der Feldgeräteadapter 6 auch derartig ausgebildet sein, dass er selbst als Kabelverschraubung dient und somit eine separate Kabelverschraubung beim Anschließen an das Feldgerät entfällt. Es versteht sich von selbst, dass das zweite Ende 9 in diesem Fall nicht zwingend in Form einer PG-Kabelverschraubung ausgebildet sein muss.

### Bezugszeichenliste

- 1: Feldgerät der Automatisierungstechnik
- 2: Feldgerätegehäuse
- 3: Gehäuseöffnung
- 4: Feldgeräteelektronik
- 5: Kabelverschraubung
- 6: Feldgeräteadapter
- 7: Adaptergehäuse
- 8: Erstes Ende des Adaptergehäuses
- 9: Zweites Ende des Adaptergehäuse
- 10: Adapterkammer
- 11: Anschlussklemmen des Feldgeräteadapters
- 12: Zweidrahtleitung
- 13: Anschlussklemmen des Feldgerätes
- 14: Adapterelektronik
- 15: Versorgungselektronik
- 16: Adapteranschlusskabel
- 17: HART Modem
- 18: Kommunikationswiderstand
- 19: Funkeinheit
- 20: M20-Gewinde zum mechanischen Anschluss des Adapters an eine Kabelverschraubung eines Feldgerätes
- 21: serielle Schnittstelle
- 22: Leitungen zur Spannungsversorgung

## Patentansprüche

1. Feldgeräteadapter (6) zur drahtlosen Datenübertragung, zumindest aufweisend:
- ein Adaptergehäuse (7) mit einem ersten und einem zweiten Ende (8, 9), wobei das erste Ende derartig ausgebildet ist, dass der Feldgeräteadapter an ein Feldgerät (1), bevorzugt einen Kabelverschraubungsanschluss (5) eines Feldgeräts, mechanisch anschließbar ist und das zweite Ende derartig ausgebildet ist, dass eine Zweidrahtleitung (12) zur Datenübertragung an den Feldgeräteadapter elektrisch anschließbar ist, wobei das Adaptergehäuse ferner eine Adapterkammer (10) zwischen dem ersten und dem zweiten Ende aufweist;
- eine in der Adapterkammer angeordnete Versorgungselektronik (15), die dazu eingerichtet ist, über einen Spannungsabgriff an der an dem zweiten Ende anschließbaren Zweidrahtleitung eine Versorgungsspannung bereitzustellen;
- zumindest eine in der Adapterkammer angeordnete und durch die bereitgestellte Versorgungspannung gespeiste Adapterelektronik (14);
- ein an dem ersten Ende befindliches Adapteranschlusskabel (16) zum elektrischen Anschließen der Adapterelektronik an eine Feldgeräteelektronik (4) des am ersten Ende anschließbaren Feldgerätes;
wobei die Adapterelektronik dazu eingerichtet ist, die Zweileitersignale zwischen der an dem erste Ende durch die Adapteranschlusskabel elektrisch anschließbaren Feldgerätelektronik und der an dem zweiten Ende anschließbaren Zweileitdrahtleitung zu kommunizieren und wobei die Adapterelektronik ferner dazu eingerichtet ist, die Zweileitersignale in Funksignale oder umgekehrt zu übersetzen und per Funk zu senden bzw. zu empfangen.

2. Feldgeräteadapter nach Anspruch 1, wobei die Adapterelektronik dazu eingerichtet ist, digitale Zweileitersignale, die auf einem HART Protokoll basieren, in Funksignale oder umgekehrt zu übersetzen und/oder die Adapterelektronik zumindest ein HART-Modem (17) aufweist, das die Umsetzung der digitalen Zweileitersignal, die auf einem bzw. dem HART Protokoll basieren, in Funksignale oder umgekehrt durchführt.

3. Feldgeräteadapter nach dem vorhergehenden Anspruch, wobei das HART-Modem (17) als ein sekundärer Master gemäß einem bzw. dem HART Protokoll eingerichtet ist.

4. Feldgeräteadapter nach zumindest einem der Ansprüche 1 bis 3, wobei die Adapterelektronik (14) ferner zumindest einen Kommunikationswiderstand (18) aufweist, der zwischen der an dem zweiten Ende (9) anschließbaren Zweidrahtleitung (12) und dem an dem ersten Ende (8) befindlichen Adapteranschlusskabel (16) angeordnet ist, wobei die Adapterelektronik (14) dazu eingerichtet ist, die Funksignale zu empfangen und die empfangenen Funksignale mit Hilfe des Kommunikationswiderstandes (18) in Zweileitersignale umzusetzen und die umgesetzten Zweileitersignale der durch die Adapteranschlusskabel (16) elektrisch anschließbaren Feldgerätelektronik (4) zuzuführen.

5. Feldgeräteadapter nach dem vorhergehenden Anspruch, wobei die Adapterelektronik (14) ferner dazu eingerichtet ist, mit Hilfe des Kommunikationswiderstandes (18) analoge Zweileitersignale, die auf einem 4-20 mA Standard basieren, in Funksignale oder umgekehrt zu übersetzen.

6. Feldgeräteadapter nach zumindest einem der vorhergehenden Ansprüche, wobei die Adapterelektronik (14) ferner dazu eingerichtet ist, die auf einem HART Protokoll basierenden digitalen Zweileitersignale, in Funksignal gemäß eines der folgenden Funkprotokolle:
- ein Bluetooth-Protokoll oder einer davon abgewandelten Variante,
- ein 6LoWPAN-Protokoll,
- ein WirelessHART-Protokoll, und/oder
- ein 6TiSCH-Protokoll
zu übersetzen.

7. Feldgeräteadapter nach zumindest einem der vorhergehenden Ansprüche, wobei die Versorgungselektronik (15) eine Spannungsreferenz , zumindest eine Diode, vorzugsweise eine z-Diode, oder einen Widerstand umfasst und der Spannungsabgriff über die Spannungsreferenz, die zumindest eine Diode, vorzugsweise die z-Diode, oder den Widerstand erfolgt.

8. Feldgeräteadapter nach dem vorhergehenden Anspruch, wobei die Spannungsreferenz dazu ausgebildet ist, die Versorgungsspannung unabhängig von einem Zweileiterstrom der Zweidrahtleitung bereitzustellen.

9. Feldgeräteadapter nach Anspruch 7, wobei die zumindest eine Diode, vorzugsweise die z-Diode, derartig angeordnet ist, dass eine Kathode der zumindest einen Diode, vorzugsweise der z-Diode, mit der an dem zweiten Ende anschließbaren Zweidrahtleitung und eine Anode mit dem an dem ersten Ende befindlichen Adapteranschlusskabel verbunden ist.

10. Feldgeräteadapter nach Anspruch 7, wobei dem Widerstand ein Überspanungsschutzwiderstand zum Überspannungsschutz parallel geschaltet ist.

11. Feldgeräteadapter nach zumindest einem der vorhergehenden Ansprüche, wobei der Kommunikationswiderstand ein Teil der Versorgungselektronik ist und der Spannungsabgriff über den Kommunikationswiderstand erfolgt.

12. Feldgeräteadapter nach zumindest einem der vorhergehenden Ansprüche, ferner umfassend eine Anschlussklemme (11) zum elektrischen Anschließen und/oder Kontaktieren der Zweidrahtleitung (12) mit der Adapterelektronik, wobei die Anschlussklemme vorzugsweise im Bereich des zweiten Endes in der Adapterkammer angeordnet ist.

13. Feldgeräteadapter nach zumindest einem der Ansprüche 1 bis 7, wobei das zweite Ende des Adaptergehäuses derartig ausgebildet ist, dass der Feldgeräteadapter über ein M20-Gewinde (20) an einen Kabelverschraubungsanschluss eines Feldgerätes mechanisch anschließbar ist.

14. Feldgeräteadapter nach zumindest einem der vorhergehenden Ansprüche, wobei die Adapterelektronik zumindest eine Funkeinheit (19) umfasst, welche vorzugsweise eine Antenne zum Senden der Funksignale und/oder zum Empfangen der Funksignale und ein Funkmodul zum Umsetzen der Funksignale aufweist.

15. Feldgerät der Automatisierungstechnik (1) zum Erfassen und/oder Stellen einer Prozessgröße aufweisend:
- ein Feldgerätegehäuse (2) mit zumindest einer Gehäuseöffnung (3);
- eine innerhalb des Feldgerätegehäuses angeordnete Feldgerätelektronik (4), die dazu eingerichtet ist, Daten in Form von Zweileitersignalen, insbesondere Zweileitersignalen die auf einem HART Protokoll basieren, zu kommunizieren;
- einen Feldgeräteadapter (6) nach einem oder mehreren der vorhergehenden Ansprüche, wobei der Feldgeräteadapter mit dem ersten Ende (8) an der zumindest einen Gehäuseöffnung (3) mechanisch angebracht und die Adapterelektronik (14) über das Adapteranschlusskabel (16) elektrisch mit der Feldgeräteelektronik verbunden ist, so dass die Zweileitersignale zwischen der Feldgeräteelektronik und einer an dem zweiten Ende (9) anschließbaren Zweidrahtleitung (12) durch die Adapterelektronik übertragen werden und die Adapterelektronik ferner dazu eingerichtet ist, die Zweileitersignal in Funksignal oder umgekehrt umzusetzen und per Funk zu übertragen bzw. zu empfangen.

## Claims

1. Field device adapter (6) designed for wireless data transmission, comprising at least:
- an adapter housing (7) with a first and a second end (8, 9), wherein the first end is formed in such a way that the field device adapter can be mechanically connected to a field device (1), preferably a cable screw connection (5) of a field device, and the second end is designed in such a way that a two-wire cable (12) for data transmission can be connected electrically to the field device adapter, wherein the adapter housing further comprises an adapter chamber (10) between the first and second end;
- a power supply electronics unit (15) arranged in the adapter chamber, which is designed to provide a supply voltage via a voltage tap on the two-wire cable that can be connected to the second end;
- at least one adapter electronics unit (14) arranged in the adapter chamber and powered by the supply voltage supplied;
- an adapter connection cable (16) located at the first end for the electrical connection of the adapter electronics unit to a field device electronics unit (4) of the field device which can be connected to the first end;
wherein the adapter electronics unit is designed to communicate the two-wire signals between the field device electronics unit - which can be electrically connected to the first end by means of the adapter connection cable - and the two-wire cable - which can be connected to the second end - and wherein the adapter electronics unit is further designed to convert the two-wire signals to radio signals or vice versa and to send them or receive them by radio means.

2. Field device adapter as claimed in Claim 1, wherein the adapter electronics unit is designed to convert digital two-wire signals, based on a HART protocol, to radio signals or vice versa and/or wherein the adapter electronics unit comprises at least a HART modem (17), which converts the digital two-wire signals, based on a protocol or the HART protocol, to radio signals or vice versa.

3. Field device adapter as claimed in the previous claim, wherein the HART modem (17) is set up as a secondary master according to a protocol or to the HART protocol.

4. Field device adapter as claimed in at least one of the Claims 1 to 3, wherein the adapter electronics unit (14) further comprises at least a communication resistor (18), wherein said resistor is arranged between the two-wire cable (12) which can be connected to the second end (9) and the adapter connection cable (16) located at the first end (8), wherein the adapter electronics unit (14) is designed to receive the radio signals and to convert the received radio signals to two-wire signals using the communication resistor (18), and to supply the converted two-wire signals to the field device electronics unit (4) which can be electrically connected via the adapter connection cable (16).

5. Field device adapter as claimed in the previous claim, wherein the adapter electronics unit (14) is further designed to convert analog two-wire signals, based on a 4-20 mA standard, to radio signals or vice versa using the communication resistor (18).

6. Field device adapter as claimed in at least one of the previous claims, wherein the adapter electronics unit (14) is further designed to convert the digital two-wire signals, based on a HART protocol, to a radio signal according to one of the following radio protocols:
- a Bluetooth protocol or a version of same,
- a 6LoWPAN protocol,
- a WirelessHART protocol and/or
- a 6TiSCH protocol.

7. Field device adapter as claimed in at least one of the previous claims, wherein the power supply electronics unit (15) comprises a voltage reference, at least one diode, preferably a Zener diode, or a resistor, and the voltage tap is performed by means of the voltage reference, the at least one diode, preferably the Zener diode, or the resistor.

8. Field device adapter as claimed in the previous claim, wherein the voltage reference is designed to provide the supply voltage independently of a two-wire current of the two-wire cable.

9. Field device adapter as claimed in Claim 7, wherein the at least one diode, preferably the Zener diode, is arranged in such a way that a cathode of the at least one diode, preferably the Zener diode, is connected to the two-wire cable which can be connected to the second end, and an anode is connected to the adapter connection cable located at the first end.

10. Field device adapter as claimed in Claim 7, wherein an overvoltage protection resistor is switched in parallel to the resistor for the purpose of overvoltage protection.

11. Field device adapter as claimed in at least one of the previous claims, wherein the communication resistor is part of the power supply electronics unit and the voltage tap is performed via the communication resistor.

12. Field device adapter as claimed in at least one of the previous claims, further comprising a connection terminal (11) for the electrical connection and/or contacting of the two-wire cable (12) with the adapter electronics unit, wherein the connection terminal is preferably arranged in the area of the second end in the adapter chamber.

13. Field device adapter as claimed in at least one of the Claims 1 to 7, wherein the second end of the adapter housing is designed in such a way that the field device adapter can be mechanically connected to a cable screw connection of a field device via an M20 thread (20).

14. Field device adapter as claimed in at least one of the previous claims, wherein the adapter electronics unit comprises at least a radio unit (19), which preferably has an antenna for the transmission of radio signals and/or for the reception of radio signals, and a radio module for the conversion of radio signals.

15. Field device used in automation technology (1) designed to measure and/or set a process variable, said device comprising:
- a field device housing (2) with at least a housing opening (3);
- a field device electronics unit (4) arranged inside the field device housing, wherein said electronics unit is designed to communicate data in the form of two-wire signals, particularly two-wire signals based on a HART protocol;
- a field device adapter (6) as claimed in one or more of the previous claims, wherein the field device adapter is mechanically attached with the first end (8) to the at least one housing opening (3) and the adapter electronics unit (14) is electrically connected to the field device electronics unit via the adapter connection cable (16) in such a way that the two-wire signals between the field device electronics unit and a two-wire cable (12) which can be connected to the second end (9) are transmitted by the adapter electronics unit, and the adapter electronics unit is further designed to convert the two-wire signal to a radio signal or vice versa, and to send them or receive them by radio means.

## Revendications

1. Adaptateur d'appareil de terrain (6) destiné à la transmission sans fil, comprenant au minimum :
- un boîtier d'adaptateur (7) avec une première et une deuxième extrémité (8, 9), la première extrémité étant conçue de telle sorte que l'adaptateur d'appareil de terrain puisse être relié mécaniquement à un appareil de terrain (1), de préférence un raccord à presse-étoupe (5) d'un appareil de terrain, et la deuxième extrémité étant conçue de telle sorte qu'un câble 2 fils (12) destiné à la transmission de données puisse être relié électriquement à l'adaptateur d'appareil de terrain, le boîtier d'adaptateur présentant en outre une chambre d'adaptateur (10) entre la première et la deuxième extrémité ;
- une électronique d'alimentation (15) disposée dans la chambre d'adaptateur, laquelle électronique est conçue pour fournir une tension d'alimentation par l'intermédiaire d'une prise de tension sur le câble 2 fils pouvant être raccordé à la deuxième extrémité ;
- au moins une unité électronique d'adaptateur (14) disposée dans la chambre d'adaptateur et alimentée par la tension d'alimentation fournie ;
- un câble de raccordement d'adaptateur (16) se trouvant à la première extrémité, destiné au raccordement électrique de l'unité électronique d'adaptateur à une unité électronique d'appareil de terrain (4) de l'appareil de terrain pouvant être raccordé à la première extrémité ;
l'électronique d'adaptateur étant conçue pour communiquer les signaux 2 fils entre l'électronique d'appareil de terrain - laquelle électronique peut être reliée électriquement à la première extrémité au moyen du câble de raccordement d'adaptateur - et le câble 2 fils - lequel câble peut être relié à la deuxième extrémité - et l'électronique d'adaptateur étant en outre conçue pour convertir les signaux 2 fils en signaux radio ou vice versa et pour les émettre et les recevoir par voie radio.

2. Adaptateur d'appareil de terrain selon la revendication 1, pour lequel l'électronique d'adaptateur est conçue pour convertir des signaux numériques 2 fils basés sur un protocole HART en signaux radio ou vice versa et/ou pour lequel l'électronique d'adaptateur comprend au moins un modem HART (17), lequel modem effectue la conversion des signaux numériques 2 fils basés sur un protocole ou le protocole HART en signaux radio ou vice versa.

3. Adaptateur d'appareil de terrain selon la revendication précédente, pour lequel le modem HART (17) est conçu comme un maître secondaire selon un protocole ou le protocole HART.

4. Adaptateur d'appareil de terrain selon au moins l'une des revendications 1 à 3, pour lequel l'électronique d'adaptateur (14) comprend en outre au moins une résistance de communication (18), laquelle résistance est disposée entre le câble 2 fils (12) pouvant être raccordé à la deuxième extrémité (9) et le câble de raccordement d'adaptateur (16) se trouvant à la première extrémité (8), l'électronique d'adaptateur (14) étant conçue pour recevoir les signaux radio et pour convertir les signaux radio reçus en signaux 2 fils à l'aide de la résistance de communication (18), et pour fournir les signaux 2 fils convertis à l'électronique d'appareil de terrain (4) qui peut être reliée électriquement via le câble de raccordement d'adaptateur (16).

5. Adaptateur d'appareil de terrain selon la revendication précédente, pour lequel l'électronique d'adaptateur (14) est en outre conçue pour convertir des signaux analogiques 2 fils basés sur une norme 4-20 mA en signaux radio ou vice versa au moyen de la résistance de communication (18).

6. Adaptateur d'appareil de terrain selon au moins l'une des revendications précédentes, pour lequel l'électronique d'adaptateur (14) est en outre conçue pour convertir les signaux numériques 2 fils basés sur un protocole HART en un signal radio selon l'un des protocoles radio suivants :
- un protocole Bluetooth ou une de ses variantes,
- un protocole 6LoWPAN,
- un protocole WirelessHART et/ou
- un protocole 6TiSCH.

7. Adaptateur d'appareil de terrain selon au moins l'une des revendications précédentes, pour lequel l'électronique d'alimentation (15) comprend une référence de tension, au moins une diode, de préférence une diode Zener, ou une résistance, et la prise de tension étant effectuée par l'intermédiaire de la référence de tension, l'au moins une diode, de préférence la diode Zener, ou la résistance.

8. Adaptateur d'appareil de terrain selon la revendication précédente, pour lequel la référence de tension est conçue pour fournir la tension d'alimentation indépendamment d'un courant 2 fils du câble 2 fils.

9. Adaptateur d'appareil de terrain selon la revendication 7, pour lequel l'au moins une diode, de préférence la diode Zener, est disposée de telle sorte qu'une cathode de l'au moins une diode, de préférence la diode Zener, est reliée au câble 2 fils pouvant être raccordé à la deuxième extrémité, et une anode est reliée au câble de raccordement d'adaptateur se trouvant à la première extrémité.

10. Adaptateur d'appareil de terrain selon la revendication 7, pour lequel une résistance de protection contre les surtensions est couplée en parallèle avec la résistance en guise de protection contre les surtensions.

11. Adaptateur d'appareil de terrain selon au moins l'une des revendications précédentes, pour lequel la résistance de communication fait partie de l'électronique d'alimentation et la prise de tension est effectuée via la résistance de communication.

12. Adaptateur d'appareil de terrain selon au moins l'une des revendications précédentes, comprenant en outre une borne de raccordement (11) pour le raccordement et/ou la mise en contact électrique du câble 2 fils (12) avec l'électronique d'adaptateur, la borne de raccordement étant de préférence disposée dans la zone de la deuxième extrémité dans la chambre d'adaptateur.

13. Adaptateur d'appareil de terrain selon au moins l'une des revendications 1 à 7, pour lequel la deuxième extrémité du boîtier d'adaptateur est conçue de telle sorte que l'adaptateur d'appareil de terrain puisse être raccordé mécaniquement à un raccord à presse-étoupe d'un appareil de terrain via un filetage M20 (20).

14. Adaptateur d'appareil de terrain selon au moins l'une des revendications précédentes, pour lequel l'électronique d'adaptateur comprend au moins une unité radio (19), laquelle unité comprend de préférence une antenne pour l'émission des signaux radio et/ou pour la réception des signaux radio, ainsi qu'un module radio pour la conversion des signaux radio.

15. Appareil de terrain de la technique d'automatisation (1) destiné à la mesure et/ou au réglage d'une grandeur de process, lequel appareil comprend :
- un boîtier d'appareil de terrain (2) avec au moins une ouverture de boîtier (3) ;
- une électronique d'appareil de terrain (4) disposée à l'intérieur du boîtier d'appareil de terrain, laquelle électronique est conçue pour communiquer des données sous forme de signaux 2 fils, notamment des signaux 2 fils basés sur un protocole HART ;
- un adaptateur d'appareil de terrain (6) selon l'une ou plusieurs des revendications précédentes, l'adaptateur d'appareil de terrain étant fixé mécaniquement avec la première extrémité (8) à l'au moins une ouverture de boîtier (3) et l'électronique d'adaptateur (14) étant raccordée électriquement à l'électronique d'appareil de terrain via le câble de raccordement d'adaptateur (16), de telle sorte que les signaux 2 fils entre l'électronique d'appareil de terrain et un câble 2 fils (12) pouvant être raccordé à la deuxième extrémité (9) sont transmis par l'électronique d'adaptateur, et l'électronique d'adaptateur est en outre conçue pour convertir les signaux 2 fils en signal radio ou vice versa, et pour les émettre ou les recevoir par voie radio.
